# EUROPÄISCHE PATENTSCHRIFT

(11) **EP 2 175 959 B1**
(45) Veröffentlichungstag und Bekanntmachung des Hinweises auf die Patenterteilung: **28.02.2018**
(21) Anmeldenummer: 08786822.0
(22) Anmeldetag: 04.08.2008
(51) Int. Cl.: B01D 46/02, B01D 46/52, F02M 35/04, F02M 35/024

(54) **FILTERANORDNUNG**
FILTER ARRANGEMENT
SYSTÈME FILTRANT

(30) Priorität: 08.08.2007 DE 202007011101 U
(43) Veröffentlichungstag der Anmeldung: 21.04.2010
(73) Patentinhaber: Mann + Hummel GmbH, 71636 Ludwigsburg (DE)
(72) Erfinder: WALZ, Stefan, 71691 Freiberg (DE); BECK, Andreas, 74366 Kirchheim (DE)
(86) Internationale Anmeldenummer: PCT/EP2008/060209
(87) Internationale Veröffentlichungsnummer: WO 2009/019242

(56) Entgegenhaltungen:
- WO-A-2005/095783
- WO-A-2007/062715
- DE-U1-202006 012 690

## Beschreibung

### Technisches Gebiet

Die vorliegende Erfindung betrifft eine Filteranordnung, insbesondere zum Filtern von Ansaugluft für eine Brennkraftmaschine eines Fahrzeugs oder zum Filtern von Luft für den Fahrzeuginnenraum.

Aufgrund der zunehmenden Luftverschmutzung ist es im Kraftfahrzeugbereich notwendig, die zur Verbrennung von Kraftstoffen benötigte Luft vor der Zuführung in die Brennkraftmaschine zu reinigen. Dies erfolgt in der Regel durch Luftfilter, welche in dem jeweiligen Verbrennungsluftansaugrohr verbaut sind.

### Stand der Technik

Aus der WO 2005/095783 ist ein entsprechendes Ansaugfilter bekannt, das auf der Unterseite der Motorhaube eines Fahrzeugs angeordnet ist. Dabei ist ein Filtermedium aus einem schlauchförmigen Körper in einer mit der Motorhaube verbundenen luftdichten Abdeckung vorgesehen. Die zu verbrennende Rohluft wird dabei in den unter der Motorhaube vorliegenden Hohlraum eingeführt und als Reinluft aus dem Inneren des Filterelements über einen Verbindungsschlauch dem Verbrennungsmotor zugeführt.

Nachteilig sind dabei eine Erhöhung des Gewichts der Motorhaube sowie das benötigte Volumen zwischen Motorhaube und dem Motorraum des Fahrzeugs. Durch die zusätzlichen Elemente, welche in die Motorhaube integriert sind, kann sich dies auch negativ auf einen Fußgängerschutz auswirken, da eine Verformung beim Auftreffen von Gegenständen auf die Motorhaube erschwert wird. Ein weiteres gattungsgemäßes Ansaugfilter ist aus der WO 2007/062715 bekannt.

Es ist daher eine Aufgabe der vorliegenden Erfindung eine verbesserte Filteranordnung zu schaffen.

### Offenbarung der Erfindung

Diese Aufgabe wird durch eine Filteranordnung mit den Merkmalen des Patentanspruchs 1 gelöst.

Demgemäß weist eine Filteranordnung ein schlauchförmiges flexibles Filterelement und eine das Filterelement umschließende Aufnahmeeinrichtung auf. Beides ist im Motorraum des Kraftfahrzeugs vorgesehen, wobei das Filterelement mindestens eine einen Kreisbogenabschnitt entsprechende Kurve beschreibt.

Durch den Einbau der Filteranordnung im Motorraum des Kraftfahrzeugs kann der Platz für die Luftfilterung der Verbrennungsluft sehr Platz sparend ausgeführt werden. Ferner wird dadurch, dass das Filterelement eine Kurve beschreibt, beispielsweise eine oder mehrere 90 Grad Kurven, eine Oberfläche des Filtermaterials des Filterelementes besonders groß, und es ist in die Aufnahmevorrichtung beziehungsweise einem entsprechenden Filtergehäuse leicht einzusetzen.

Es können auch mehrere Kreisbogenabschnitte oder Kurven durch das Filterelement innerhalb der Aufnahmeeinrichtung vorgesehen werden. Das Filterelement ist spiralförmig um sich selbst gewickelt und kann dabei schraubenförmig oder in einer Ebene angeordnet sein. Es ist auch möglich, dass das Filterelement und die Aufnahmeeinrichtung oder das Filtergehäuse konzentrisch zueinander vorgesehen sind und sowohl die Aufnahmeeinrichtung als auch das Filterelement mehrere Kurven beschreiben. Dadurch kann der begrenzte Raum im Motorbereich eines Fahrzeugs günstig zur Luftfilterung verwendet werden. Es ist zum Beispiel möglich, dass die Aufnahmeeinrichtung als Teil eines Luftansaugschlauches für den Verbrennungsmotor ausgeführt ist. Ein entsprechender Schlauch kann zum Beispiel um Bauteile, welche bereits im Motorraum vorliegen in der Art einer Wicklung geführt sein. Selbstverständlich sind auch mehrere schlauchförmige Filterelemente in der Aufnahmeeinrichtung denkbar.

In einer Ausführungsform der Filteranordnung trennt das Filterelement einen Reinluftbereich von einem Rohluftbereich der Aufnahmeeinrichtung, und der Rohluftbereich schließt an einen Innenraum des Filterelementes an. Dabei strömt zu filternde Rohluft in das Filterelement ein und kann als Reinluft aus dem Außenraum des Filterelementes zwischen dem Filterelement und einer Gehäuse- oder Aufnahmewandung abgegriffen werden. Das Filterelement weist zum Beispiel die Form eines Strumpfes auf.

Alternativ ist ein Rohluftbereich der Aufnahmeeinrichtung zwischen einer Wandung der Aufnahmeeinrichtung und dem Filterelement gebildet, und Reinluft ist aus einem einen Reinluftbereich bildenden Innenraum des Filterelementes abgreifbar.

Das Filterelement ist zum Beispiel derart in der Aufnahmeeinrichtung angeordnet, dass zu filternde Luft das Filterelement im Wesentlichen radial durchströmt.

In einer bevorzugten Ausführungsform ist die Aufnahmeeinrichtung aus einem flexiblen, auf einen Druck von außen derart nachgiebigem Material ausgeführt, dass bei einem Eindrücken einer den Motorraum abdeckenden Haube die Filteranordnung das von ihr eingenommene Volumen um ein vorgegebenes Maß freigibt. In der Regel sind um einen Fußgängerschutz zu erfüllen standardisierte Eindringtiefen, beispielsweise bei einem Aufprall eines Körpers auf die Motorhaube des Fahrzeuges angegeben. Vorteilhaft gibt somit die Aufnahmeeinrichtung und das flexible und daher auch verformbare Filtermaterial in einem Unglücksfall Volumen frei, wodurch ein angefahrener Fußgänger möglichst sanft von der Motorhaube und dem darunter liegenden nachgiebigem Material gebremst wird.

Erfindungsgemäß weist das Filterelement einen schlauchförmigen Hohlraum mit einer Längsausdehnung und einer Querausdehnung aus einem luftdurchlässigen Filtermaterial auf. Dabei ist das Filterelement durch mehrfache Querfaltungen des Filtermaterials in zumindest der Längsausdehnung reversibel stauch- und/oder streckbar. Die Querfaltungen sind dabei in einem nicht verschwindenden Winkel zu der Längsausdehnungsrichtung ausgebildet. Durch geeignete Faltungsgeometrien lassen sich aus bogenförmigen Filtermaterialien, wie beispielsweise einem Filtervlies, verschiedene schlauch- oder balgenförmige Hohlräume darstellen.

Vorzugsweise sind ferner Fixiermittel, wie zum Beispiel im Innenraum des Filterelementes verlaufende Drahtverstrebungen oder gerüstartige Anordnungen, zum Stabilisieren der Form und/oder der Falten des Filterelementes vorgesehen. Es ist auch denkbar, dass das flexible schlauchförmige Filterelement von beispielsweise Leimfäden umwickelt ist, um Falten oder Formen zu fixieren.

Alternativ kann die Filteranordnung auch zur Filtration von Luft für den Fahrzeuginnenraum angewendet werden. Dazu wird Rohluft aus der Umgebung des Fahrzeuges durch das Filterelement gereinigt und die Reinluft in den Fahrzeuginnenraum geleitet. Innenraumluftfilter können im Motorraum oder außerhalb oder im Fahrgastinnenraum angeordnet sein. Es ist möglich, die Filteranordnung für die Innenluft als Bestandteil der Lüftungs- oder Klimaanlage auszuführen.

Weitere vorteilhafte Ausgestaltungen der Erfindung sind Gegenstand der Unteransprüche sowie der im Folgenden beschriebenen Ausführungsbeispiele.

### Kurze Beschreibung der Zeichnungen

Im Folgenden wird die Erfindung anhand bevorzugter Ausführungsbeispiele unter Bezugnahme auf die beigelegten Figuren näher erläutert. Dabei zeigt:
Fig. 1: eine Draufsicht eines Motorraums mit einer darin angeordneten Filteranordnung (nicht erfindungsgemäß);
Fig. 2: eine perspektivische Darstellung eines Filterelementes (nicht erfindungsgemäß);
Fig. 3: eine perspektivische Darstellung einer Ausführungsform einer Filteranordnung;
Fig. 4: eine weitere Ausführungsform einer Filteranordnung (nicht erfindungsgemäß);
Fig. 5: noch eine weitere Ausführungsform einer Filteranordnung (nicht erfindungsgemäß);
Fig. 6: eine Draufsicht eines Motorraums mit einer erfindungsgemäßen Ausführungsform einer Filteranordnung; und
Fig. 7: noch eine perspektivische Darstellung einer erfindungsgemäßen Filteranordnung.

In den Figuren sind gleiche beziehungsweise funktionsgleiche Elemente mit denselben Bezugszeichen versehen worden, sofern hier nichts anderes angegeben ist.

### Ausführungsform(en) der Erfindung

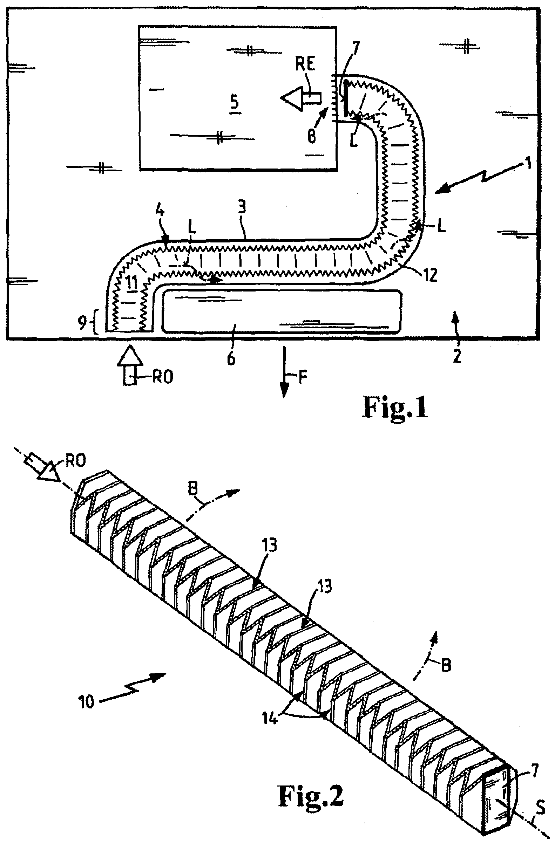

In der Figur 1 ist ein nicht erfindungsgemäßes Ausführungsbeispiel für eine Filteranordnung in einem Motorraum in der Draufsicht dargestellt. In dem Motorraum 2 ist beispielhaft ein Verbrennungsmotor 5 dargestellt. In der Figur 1 entspricht die untere Seite des Motorraums 5 der Vorderseite des Fahrzeugs. Der Pfeil F deutet die normale Vorwärtsfahrtrichtung an. Im Frontbereich ist daher beispielhaft ein Kühler 6 dargestellt.

Die Filteranordnung 1 ist in der Form eines Verbrennungsansaugluftschlauches ausgeführt. Dabei wird durch eine Eintrittsöffnung 9 Rohluft RO in den Innenraum eines konzentrisch im Gehäuse 3 der Filteranordnung 1 vorgesehenen Filterelementes 4 eingebracht. Das Filterelement 4 ist schlauchförmig beispielsweise über geeignete Faltungen oder bereits mit einem derart flexiblen Material ausgeführt, dass es flexibel, insbesondere kurvig, einsetzbar ist. Das in der Figur 1 dargestellte Filterelement 4 ist beispielsweise strumpfförmig ausgeführt.

Eine Austrittsöffnung 8 des Gehäuses 3 beziehungsweise der Aufnahmeeinrichtung für das Filterelement 4 ist an den entsprechenden Luftansaugstutzen des Verbrennungsmotors 5 gekoppelt. Dort tritt dann gefilterte Rohluft als Reinluft RE aus. Die zu filternde Luft tritt in den Innenraum 11 des Filterelementes 4 ein, der somit einen Rohluftbereich bildet. Im Zwischenraum zwischen der äußeren Oberfläche des Filterelementes 4 und der inneren Gehäusewandung 3 liegt somit der Reinluftbereich 12 der Filteranordnung 1 vor. Durch die Anordnung der Filteranordnung 1 im Motorraum 2 ist der dazu benötigte Platz sehr flexibel zu gestalten. Sofern bei der Konstruktion eines Fahrzeugs konstruktionsbedingt Freiräume vorliegen, können diese wegen der schlauchförmigen Gestaltung der Filteranordnung 1 flexibel verbaut werden.

In der Ausführungsform der Figur 1 tritt Rohluft RO in der Nähe des Kühlers 6 frontal durch die Eintrittsöffnung 9 der Filteranordnung 1 entgegen der Vorwärtsfahrtrichtung F des Fahrzeugs ein. Das Filterelement 4 sowie die konzentrisch dazu angeordnete Aufnahmeeinrichtung 3 vollzieht eine im Wesentlichen 90 Grad Kurve und führt horizontal, senkrecht zur Vorwärtsfahrtrichtung F hinter dem Kühler 6 in der Anordnung der Figur 1 nach rechts. Am Ende dieser zum Beispiel 70 cm langen geraden Strecke ist eine weitere Kurve der Filteranordnung 1 vorgesehen, um in Richtung zum Verbrennungsmotor 5 einen Anschluss an dessen hier nicht näher bezeichneten Luftansaugstutzen zu schaffen. Das Filterelement weist somit mehrere Kurven oder Windungen auf.

In der Figur 2 ist ein nicht erfindungsgemäßes Ausführungsbeispiel für ein gefaltetes Filterelement 10 zum Einsatz in zum Beispiel einer bezüglich der Figur 1 beschriebenen Filteranordnung perspektivisch dargestellt. Das Filterelement weist eine Reihe von Querfaltungen 13 und Diagonalfaltungen 14 auf, wodurch aus einem Filtermaterialbogen ein flexibler Schlauch entsteht. Der Schlauch ist an dem aufgrund der Perspektive sichtbaren Ende 7 verschlossen. Rohluft RO tritt somit am distalen Ende gegenüber dem verschlossenen Ende 7 in den Innenraum des Filterelementes 10 ein und fließt im Wesentlichen radial zu dessen Längsachse, welche mit S bezeichnet ist aus dem Filterelement 10 heraus. Durch die Faltungsgeometrie ist es möglich, das Filterelement beispielsweise entlang der Pfeile B zu biegen und daher flexibel in eine schlauchförmige Gehäuseform einzuführen.

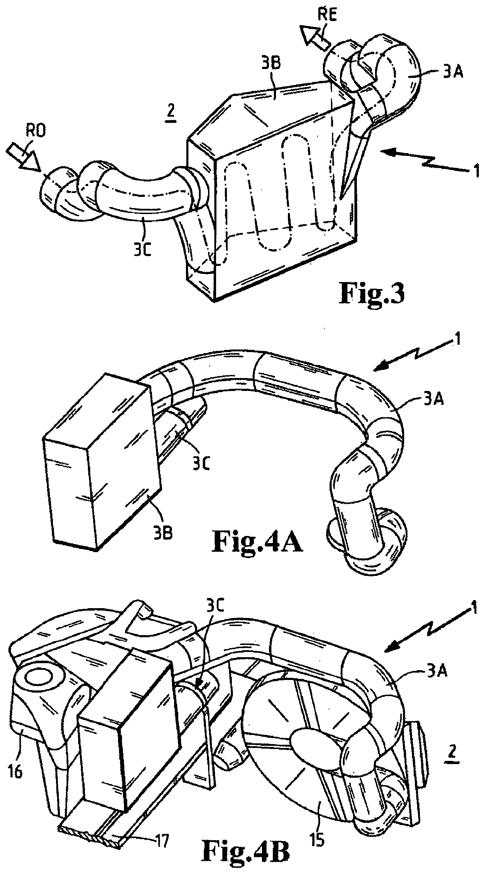

In der Figur 3 ist eine weitere Ausführungsform eines Filterelementes perspektivisch dargestellt. Dabei sind rohrförmige Gehäuseteile 3A, 3C vorgesehen, die in einen kastenförmigen Gehäuseteil 3B münden. Innerhalb der aus den rohrförmigen Gehäuseteilen 3A, 3C und dem Kasten 3B gebildeten Aufnahmeeinrichtung wird ein schlauchförmiges Filterelement, beispielsweise wie es in der Figur 2 dargestellt ist, eingeführt. Dies kann den geschwungenen Kurven der röhren- oder schlauchförmigen Teile 3A und 3C wegen seiner Flexibilität folgen. In dem kastenförmigen Abschnitt 3B des Gehäuses ist beispielsweise eine zickzackförmige oder erfindungsgemäß eine gewickelte Anordnung des Schlauches aus Filtermaterial möglich. Dadurch wird die Oberfläche des gesamten Filterelementes und damit die Effizienz der Filteranordnung 1 weiter verbessert. Das Filterelement selbst ist in der Figur 3 nicht sichtbar. Ein möglicher Verlauf dessen Längsachse ist jedoch durch die strichpunktierte Linie angedeutet.

Eine andere Ausführungsform bildet eine zweiflutige Zuführung und Filterung der Rohluft durch die Gehäuseabschnitte 3C und 3A in den kastenförmigen Abschnitt 3B mit der Zuführung der Reinluft zum Motor mit einer zusätzlichen Luftleitung (in Fig. 3 nicht dargestellt).

Eine weitere nicht erfindungsgemäße Ausführungsform einer Filteranordnung 1 ist in der Figur 4A, 4B perspektivisch dargestellt. In der Figur 4A ist eine der Figur 3 ähnelnde Gehäuseform aus schlauchförmigen Abschnitten 3A, 3C und einem kastenförmigen Abschnitt 3B dargestellt. Durch die Flexibilität des innen liegenden Filterelementes und die entlang der gesamten Länge des schlauchförmigen Gehäuses sich ergebenden Filterwirkung ist die erfindungsgemäße Filteranordnung besonders platzgünstig im Motorraum verbaubar. Auch ist es vorstellbar, einen Abschnitt der Aufnahmeeinrichtung 3B für Maßnahmen zur Wasser- oder Schneeabscheidung oder zur Verbesserung der Akustik zu nutzen. In diesem Fall würde das Gehäuseteil 3A hauptsächlich zur Filtration genutzt.

In der Figur 4B ist beispielsweise perspektivisch dargestellt, wie sich das in der Figur 4A isoliert dargestellte Filtergehäuse 3 im Motorraum einsetzen lässt. Dabei ist zum Beispiel der schlauchförmige Abschnitt 3A zumindest teilweise um ein Bauteil 15 im Motorraum 2 geführt. Die Filteranordnung ist somit um Elemente 15, 16, 17 im Motorraum 2 herum und durch Zwischenräume geführt. Konventionell ungenutzter Platz im Motorraum 2 wird damit zum Filtern von Ansaugluft durch die Filteranordnung verwendet.

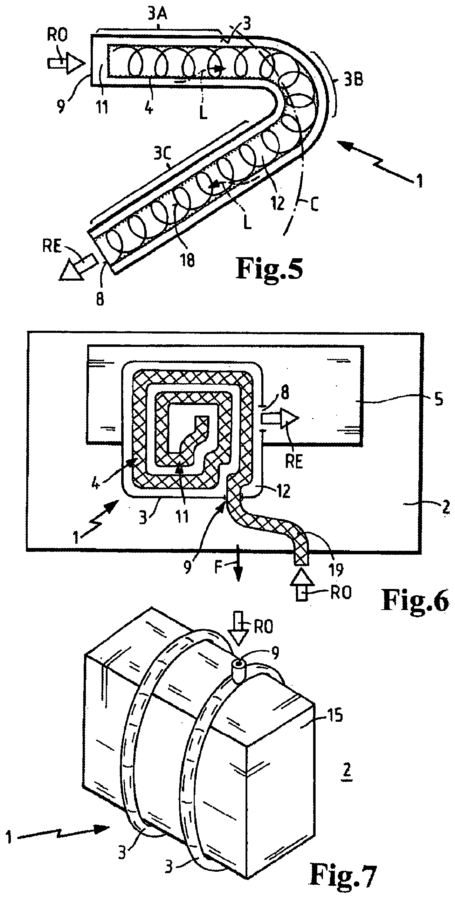

Die Figur 5 zeigt noch ein nicht erfindungsgemäßes Ausführungsbeispiel einer Filteranordnung im Querschnitt. Dabei ist das Filtergehäuse beziehungsweise die Aufnahmeeinrichtung 3 rohrförmig ausgestaltet und in einem Abschnitt 3B, beispielsweise entlang eines Ausschnittes eines Kreisbogens C gebogen. An den gebogenen Abschnitt 3B schließen sich zwei im Wesentlichen gerade rohrförmige Abschnitte 3A, 3C an. Im Inneren ist im Wesentlichen konzentrisch ein schlauch- oder rohrförmiges Filterelement 4 vorgesehen.

Durch eine Eintrittsöffnung 9 tritt Rohluft RO in den Zwischenraum 11 zwischen Filterelement 4 und innerer Gehäusewandung 3 ein. Dieser Rohluftbereich 11 umschließt im Wesentlichen das Filterelement 4. Luft tritt somit radial, beispielsweise entlang der Pfeile L in den Innenraum 12 des Filterelementes 4 ein, welcher den Reinluftbereich 12 der Filteranordnung 1 bildet. An einem offenen Ende 8 des schlauchförmigen Filterelementes 4 lässt sich die Reinluft RE abgreifen.

Im Inneren des Filterelementes 4 ist zum Beispiel zur Stabilisierung dessen Form oder gegebenenfalls von Faltungen ein drahtförmiges Stabilisierungsmittel vorgesehen, das schraubenförmig die Wandungen oder die Oberflächen des Filterelementes 4 stützt.

In der Figur 6 ist eine erfindungsgemäße Ausführungsform einer Filteranordnung in einem Motorraum in der Draufsicht dargestellt. Der Motorraum 2 umfasst dabei insbesondere den Motorblock 5. Die Aufnahmeeinrichtung 3 beziehungsweise das Gehäuse 3 der Filteranordnung kann zum Beispiel auf dem Motorblock 5 vorgesehen sein. Dabei weist das Gehäuse 3 eine Öffnung 9 auf, an die im Innenraum des Filtergehäuses 3 das schlauchförmige Filterelement 4 anschließt. Von einer Eintrittsöffnung, beispielsweise der Karosserie oder dem Kühlergrill, des Fahrzeugs zur Eintrittsöffnung 9 des Gehäuses 3 beziehungsweise Filteranordnung 1 ist ein Luftzuführschlauch 19 vorgesehen.

Im Inneren des Gehäuses ist das Filterelement 4 schneckenartig umeinander gewunden und kann daher besonders flach in dem Gehäuse 3 untergebracht werden. Das Gehäuse 3 weist ferner eine Reinluftaustrittsöffnung 8 auf, die beispielsweise mit einem Luftansaugstutzen des Motors 5 verbunden ist. Die Ausführungsform, welche in der Figur 6 dargestellt ist, hat den Innenraum 11 des Filterelementes 4 als Rohluftbereich 11, während der Zwischenraum zwischen dem Filterelement 4 und dem Gehäuse 3 als Reinluftbereich 12 verwendet ist.

Die in der Figur 6 dargestellte Ausführungsform bietet den Vorteil, dass bei einer geeignet weichen oder nachgiebigen Ausführung des Gehäuses 3 ein Fußgängerschutz erfüllt werden kann, da bei einem Aufprall beziehungsweise einem Eindrücken der über dem Motorraum 2 vorhandenen Motorhaube die Filteranordnung 1 sanft nachgibt und Stöße dämpft.

Schließlich ist in der Figur 7 eine schematische Perspektivansicht einer weiteren erfindungsgemäßen Ausführungsform einer Filteranordnung 1 in einem Motorraum 2 dargestellt. Dabei ist ein im Motorraum 2 vorgesehenes Element 15, beispielsweise ein Teil des Motorblockes oder der Antriebseinheiten, von einem schlauchförmigen Filtergehäuse 3 umwickelt, welches im Inneren ein wie in den vorhergehenden Beispielen dargestelltes Filterelement aufweist. Ferner ist eine Öffnung 9 des Filterelementes 3 vorgesehen, durch

## Patentansprüche

1. Filteranordnung (1) mit einem schlauchförmigen flexiblen Filterelement (4) und einer das Filterelement (4) umschließenden Aufnahmeeinrichtung (3), welche zur Verwendung in einem Motorraum (2) eines Kraftfahrzeugs vorgesehen sind, wobei das Filterelement (4) mindestens eine einen Kreisbogenabschnitt entsprechende Kurve beschreibt, wobei das Filterelement (4) einen schlauchförmigen Hohlraum mit einer Längsausdehnung und einer Querausdehnung aus einem luftdurchlässigen Filtermaterial aufweist, wobei das Filterelement (4) durch mehrfache Querfaltungen (13, 14) des Filtermaterials in zumindest der Längsausdehnung reversibel stauch- und /oder streckbar ist, und die Querfaltungen in einem nicht verschwindenden Winkel zu der Längsausdehnungsrichtung ausgebildet sind, **dadurch gekennzeichnet, dass** das Filterelement (4) innerhalb der Aufnahmeeinrichtung (3) spiralförmig um sich selbst gewickelt vorgesehen ist.

2. Filteranordnung (1) nach Anspruch 1, wobei das Filterelement (4) einen Reinluftbereich (12) von einem Rohluftbereich (11) der Aufnahmeeinrichtung (3) trennt, und der Rohluftbereich (11) an einen Innenraum des Filterelements (4) anschließt.

3. Filteranordnung (1) nach Anspruch 1, wobei ein Rohluftbereich (11) der Aufnahmeeinrichtung (3) zwischen einer Wandung der Aufnahmeeinrichtung (3) und dem Filterelement (4) gebildet ist und Reinluft aus einem einen Reinluftbereich (12) bildenden Innenraum des Filterelements (4) abgreifbar ist.

4. Filteranordnung (4) nach einem der Ansprüche 1 - 3, wobei das Filterelement (4) in der Aufnahmeeinrichtung (3) derart angeordnet ist, dass zu filternde Luft das Filterelement (4) im Wesentlichen radial durchströmt.

5. Filteranordnung (1) nach einem der Ansprüche 1 - 4, wobei die Aufnahmeeinrichtung (3) und das Filterelement (4) mehrere, jeweils einen Kreisbogenabschnitt entsprechende, Kurven beschreiben.

6. Filteranordnung (1) nach einem der Ansprüche 1 - 5, wobei in der Aufnahmeeinrichtung (3) mehrere schlauchförmige Filterelemente (4) vorgesehen sind.

7. Filteranordnung (1) nach einem der Ansprüche 1 - 6, wobei das Filterelement (4) ein Filtervliesmaterial, insbesondere aus Kunststofffasern aufweist.

8. Filteranordnung (1) nach einem der Ansprüche 1 - 7, wobei die Aufnahmeeinrichtung (3) Metall und/oder Kunststoff aufweist.

9. Filteranordnung (1) nach einem der Ansprüche 1 - 8, wobei die Aufnahmeeinrichtung (3) als Spritzgussteil gefertigt ist.

10. Filteranordnung (1) nach einem der Ansprüche 1 - 9, wobei die Aufnahmeeinrichtung (3) in Blasformtechnik gefertigt ist.

11. Filteranordnung (3) nach einem der Ansprüche 1 - 10, wobei Fixiermittel (18) zum Stabilisieren der Form und/oder der Falten des Filterelements (4) vorgesehen sind.

12. Motorraum (2) mit einer Filteranordnung (1) nach einem der Ansprüche 1 - 11, wobei die Aufnahmeeinrichtung (3) aus einem flexiblen, auf einen Druck von außen derart nachgiebigen Material ausgeführt ist, dass bei einem Eindrücken einer den Motorraum (2) abdeckenden Haube die Filteranordnung (1) das von ihr eingenommene Volumen um ein vorgegebenes Maß freigibt.

13. Motorraum (2) nach Anspruch 12, wobei die Aufnahmeeinrichtung (3) zumindest als ein Teil einer Luftansaugleitung ausgeführt ist.

14. Motorraum (2) nach Anspruch 12 oder 13, wobei die Aufnahmeeinrichtung (3) und das Filterelement (4) in der Art einer Wicklung um ein im Motorraum (2) vorgesehenes Bauteil (15, 16, 17) geführt sind.

## Claims

1. Filter arrangement (1) with a hose-shaped flexible filter element (4) and an receiving device (3) enclosing the filter element (4) provided for being used in an engine compartment (2) of a motor vehicle, wherein the filter element (4) describes at least one curve corresponding to a circular arc section, wherein the filter element (4) features a hose-shaped hollow space with a longitudinal extension and a transverse extension made of air-permeable filter material, wherein the filter element (4), due to several transverse folds (13, 14) of the filter material, is reversibly compressible and/or extendible in at least the longitudinal extension, and the transverse folds are designed in a non-vanishing angle in relation to the longitudinal extension direction, **characterized in that** the filter element (4) is spirally wound around itself in the receiving device (3).

2. Filter arrangement (1) according to claim 1, wherein the filter element (4) separates a clean air area (12) from a raw air area (11) of the receiving device (3) and the raw air area (11) is connected to an interior space of the filter element (4).

3. Filter arrangement (1) according to claim 1, wherein a raw air area (11) of the receiving device (3) is realized between a wall of the receiving device (3) and the filter element (4) and clean air can be obtained from an interior space of the filter element (4) forming a clean air area (12).

4. Filter arrangement (4 [sic?]) according to one of the claims 1-3, wherein the filter element (4) is disposed in the receiving device (3) in such a way that the air to be filtered flows through the filter element (4) substantially radially.

5. Filter arrangement (1) according to one of the claims 1-4, wherein the receiving device (3) and the filter element (4) describe several curves, each corresponding to a circular arc section.

6. Filter arrangement (1) according to one of the claims 1-5, wherein several hose-shaped filter elements (4) are provided in the receiving device (3).

7. Filter arrangement (1) according to one of the claims 1-6, wherein the filter element (4) features a non-woven filter material, in particular made of synthetic fibers.

8. Filter arrangement (1) according to one of the claims 1-7, wherein the receiving device (3) features metal or synthetic material.

9. Filter arrangement (1) according to one of the claims 1-8, wherein the receiving device (3) is manufactured as injection-molded part.

10. Filter arrangement (1) according to one of the claims 1-9, wherein the receiving device (3) is manufactured in blow molding technology.

11. Filter arrangement (3 [sic?]) according to one of the claims 1-10, wherein fixing means (18) for stabilizing the form and/or the folds of the filter element (4) are provided.

12. Engine compartment (2) with a filter arrangement (1) according to one of the claims 1-11, wherein the receiving device (3) is made of a flexible material, resilient to an external pressure in such a way that, when pressing a hood covering the engine compartment (2), the filter arrangement (1) releases the volume occupied by it by a predefined measure.

13. Engine compartment (2) according to claim 12, wherein the receiving device (3) is designed at least as being a part of an air-intake duct.

14. Engine compartment (2) according to claim 12 or 13, wherein the receiving device (3) and the filter element (4) are wound around a component (15, 16, 17) provided in the engine compartment (2) like a winding.

## Revendications

1. Agencement de filtre (1) pourvu d'un élément filtrant tubulaire (4) flexible et un dispositif de logement (3) pour l'utilisation dans un compartiment moteur (2) d'un véhicule automobile et qui entoure l'élément filtrant (4), dans lequel l'élément filtrant (4) décrit au moins une courbe correspondant à une section d'arc de cercle, dans lequel l'élément filtrant (4) présente une cavité tubulaire avec une extension longitudinale et une extension transversale d'un matériau filtrant perméable à l'air, dans lequel l'élément filtrant (4) est comprimable et/ou extensible de manière réversible par plusieurs plis transversaux (13, 14) du matériau filtrant au moins dans l'extension longitudinale, et les plis transversaux sont exécutés dans un angle non évanouissant par rapport au sens de l'extension longitudinale, **caractérisé en ce que** l'élément filtrant (4) est enroulé autour de lui-même en forme de spirale à l'intérieur du dispositif de logement (3).

2. Agencement de filtre (1) selon la revendication 1, dans lequel l'élément filtrant (4) sépare une zone d'air pur (12) d'une zone d'air brut (11) du dispositif de logement (3) et la zone d'air brut (11) débouche sur un espace intérieur de l'élément filtrant (4).

3. Agencement de filtre (1) selon la revendication 1, dans lequel une zone d'air brut (11) du dispositif de logement (3) est formée entre une paroi du dispositif de logement (3) et l'élément filtrant (4) et l'air pur peut être obtenu d'un espace intérieur de l'élément filtrant (4) formant une zone d'air pur (12).

4. Agencement de filtre (4 [sic?]) selon l'une des revendications 1-3, dans lequel l'élément filtrant (4) est disposé dans le dispositif de logement (3) de sorte que l'air devant être filtre passe à travers l'élément filtrant (4) de manière essentiellement radiale.

5. Agencement de filtre (1) selon l'une des revendications 1-4, dans lequel le dispositif de logement (3) et l'élément filtrant (4) décrivent plusieurs courbes, chacune correspondant à une section d'arc de cercle.

6. Agencement de filtre (1) selon l'une des revendications 1-5, dans lequel plusieurs éléments filtrants tubulaires (4) sont prévues dans le dispositif de logement (3).

7. Agencement de filtre (1) selon l'une des revendications 1-6, dans lequel l'élément filtrant (4) présente un matériau non-tissé, notamment en fibres synthétiques.

8. Agencement de filtre (1) selon l'une des revendications 1-7, dans lequel le dispositif de logement (3) présente du métal et/ou de la matière plastique.

9. Agencement de filtre (1) selon l'une des revendications 1-8, dans lequel le dispositif de logement (3) est réalisé en tant que pièce moulée par injection.

10. Agencement de filtre (1) selon l'une des revendications 1-9, dans lequel le dispositif de logement (3) est réalisé par un procédé de soufflage sur matrice.

11. Agencement de filtre (3 [sic?]) selon l'une des revendications 1-10, dans lequel des éléments de fixation (18) sont prévus pour stabiliser la forme et/ou les plis de l'élément filtrant (4).

12. Compartiment moteur (2) avec un agencement de filtre (1) selon l'une des revendications 1-11, dans lequel le dispositif de logement (3) est réalisé par un matériau flexible et tellement élastique dû à une pression extérieure que, lors d'un enfoncement d'un capot couvrant le compartiment moteur (2), l'agencement de filtre (1) relâche le volume occupé par ce capot d'une mesure prédéfinie.

13. Compartiment moteur (2) selon la revendication 12, dans lequel le dispositif de logement (3) est exécuté au moins en tant qu'une partie d'une conduite d'aspiration d'air.

14. Compartiment moteur (2) selon la revendication 12 ou 13, dans lequel le dispositif de logement (3) et l'élément de filtre (4) sont enroulés à la manière d'une bobine autour d'un composant (15, 16, 17) prévu dans le compartiment moteur (2).
